# EUROPEAN PATENT APPLICATION

(11) **EP 2 124 328 A1**
(43) Date of publication of application: **25.11.2009**
(21) Application number: 08156500.4
(22) Date of filing: 20.05.2008
(51) Int. Cl.: H02P 29/00, H02P 27/08, H02M 1/12, H02M 5/458

(54) **Apparatus and Method for Mains Harmonic Reduction in AC Drive Circuits**

(71) Applicant: SIEMENS AKTIENGESELLSCHAFT, 80333 München (DE)
(72) Inventor: CARTER, Robert, Knutsford, Cheshire WA16 8XU (GB); Clarke, Alan, Biddulph, Staffordshire ST8 7BB (GB)
(74) Representative: Morgan, Marc

(57) **Abstract**

An AC drive for a motor includes a rectifier to rectify a mains supply and to provide a rectified output to an inverter. The inverter is driven to provide a poly-phase set of driving voltages to a motor. The inverter is controlled by a controller which provides a control waveform forming a basis waveform to which is added a frequency modulation which is at a multiple of the input mains frequency. This reduces the harmonics and reduces the need for expensive filtering components.

## Description

This invention relates to apparatus and method for mains harmonic reduction in AC drive circuits for electric motors.

AC drive circuits usually comprise inverters which draw essentially constant power from a DC link when DC link voltage compensation is incorporated.
(DC link voltage compensation is an automatic compensation for a change in the DC link voltage by narrowing or widening Pulse Width Modulation driving pulses so that the mean voltage seen by the load remains correct.)

This produces a mains current waveform which is rich in unwanted harmonics which has a number of undesirable consequences.

A first consequence is that the peak current rating of the mains carrying components and tracks is high which in turn makes wound components very expensive if magnetic saturation is to be avoided.

A second consequence is that the root mean square input current is very high leading to high levels of power losses and the need for high fuse ratings.

A third consequence is that it becomes more expensive to filter the drive sufficiently to achieve the necessary statutory mains current harmonic levels to meet present and forthcoming legislation.

The invention arose in an attempt to alleviate the aforementioned problems.

According to the invention there is provided an AC drive for an electric motor comprising a supply input and means to, in use, provide driving voltage waveforms to the electric motor and a PWM modulator for generating the waveforms from a signal including at least a first and a second component which second component having a frequency being a multiple of the mains voltage frequency provided at the supply input.

By providing driving voltage waveforms from a signal including a component having a frequency being a multiple of the mains voltage frequency provided at the supply input, the harmonics generated are reduced.

Preferably, the component has a frequency of six times that of the input voltage three phase supply. This has been found to provide a significant degree of smoothing resulting in a marked reduction in interference harmonics.

In the preferred form, the AC drive comprises a bridge rectifier connected to a mains power supply for providing a DC link voltage to an inverter comprising a set of switches and a processor coupled to the inverter to control its operation by providing control waveforms to control the switching such that the switches provide three phase driving voltages to in use be coupled to the motor. The control waveforms comprise a three phase set of pulsewidth modulated waveforms describing a rotating voltage vector.

In the preferred embodiment the control waveforms are held in a memory table in digitised form. It may be possible to generate these in real time as required.

The invention also provides a method.

A specific embodiment of the invention will now be described, by way of example only, with reference to the drawing in which:
Figure 1 shows in block diagram form an AC motor driver in accordance with the invention;
Figure 2 shows a motor controller used in the embodiment of figure 1; and
Figures 3 to 5 are explanatory figures illustrating the performance of the embodiment.

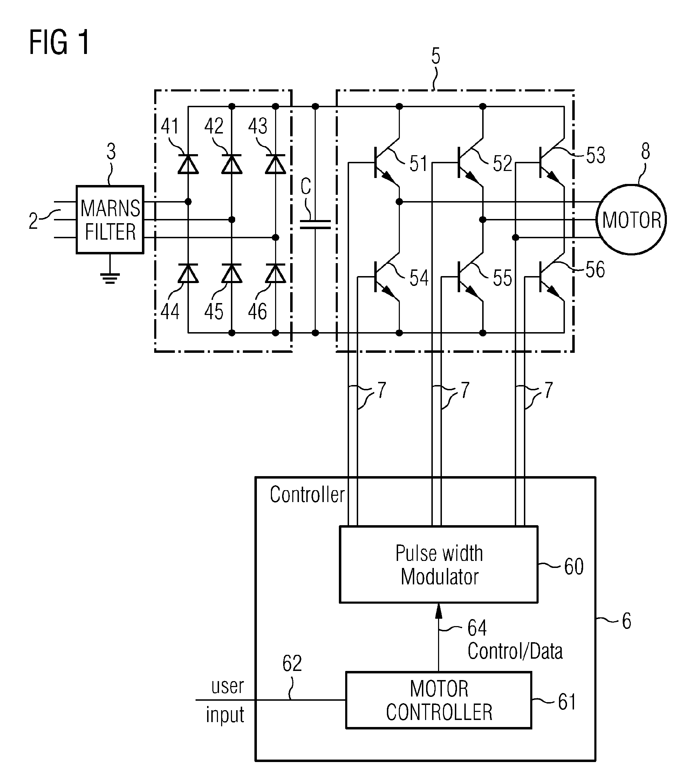

With reference to Figure 1, an AC motor drive and AC motor arrangement 1 is shown and comprises a three phase mains voltage supply 2 applied to a mains filter 3 which in turn provides a three phase filtered output to a rectifier 4. The rectifier 4 provides a DC link voltage to the upper voltage rail DC+ and a lower rail DC- (which is smoothed by a capacitor C) to an inverter 5. The inverter 5 is controlled by a controller/processor 6 via control input signals applied via lines 7. The resultant three phase driving voltages are output to an AC motor 8 which rotates accordingly.

The mains filter 3 comprises a number of wire wound inductors, capacitors and resistances which filter the input mains voltage in a manner well known to the skilled person.

The rectifier 4 converts the applied input filtered AC phases into a rectified DC output (again in a manner that is well known in the art) using a bridge network of rectifiers 41 to 46.

The inverter 5 comprises six switching elements in this case transistors 51 to 56. The gates of the transistors 51 to 56 are coupled to the control signal lines 7. Pulse width modulated signals are provided on the control lines to selectively switch the states of the transistors 51 to 56 to provide the desired three phase driving voltages to be applied to the motor 8. This process is also well known in the art.

The processor 6 is programmed to provide the correct control signals to the control lines 7 in accordance with the invention.

The processor 6 includes a pulse width modulator 60 which is coupled to a motor controller 61. The motor controller 61 provides control data 64 to the pulse width modulator 60. The motor controller 61 has a user input 62 which allows a motor set point and acceleration rates to be entered. These are held in associated memory.

The motor controller 61 operates in an open or a closed loop. By open loop it is meant that the data 64 comprises voltage and frequency set points sent to the PWM 60. In closed loop (vector operation) voltage and phase set points are sent to the PWM 60. The phase set points must be continuously updated in order to rotate the motor in closed loop control. Closed loop control also relies upon some feedback from the motor in a manner well known to the person skilled in the art.

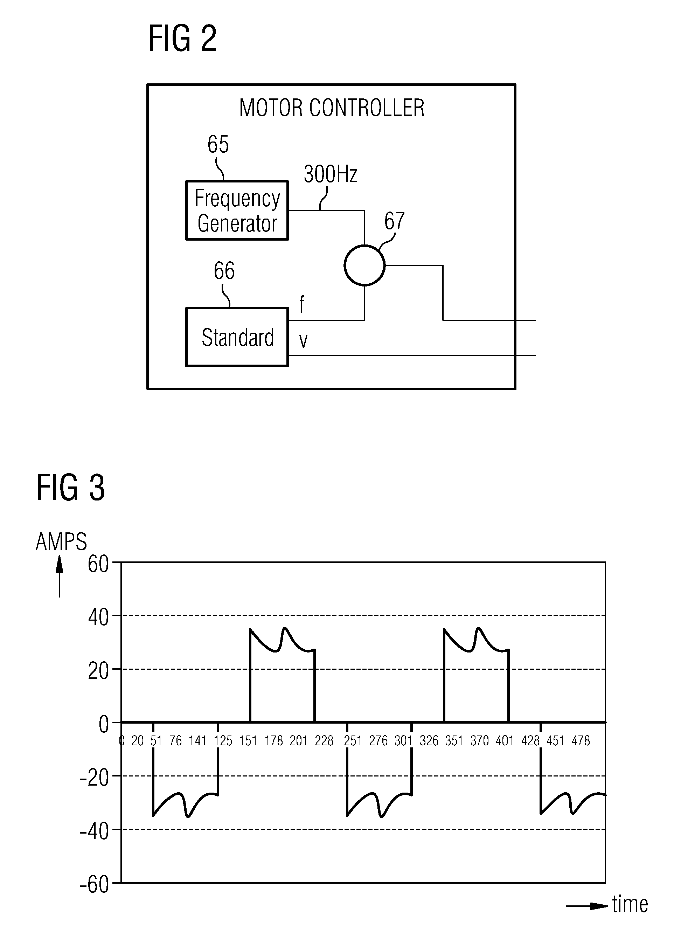

The motor controller 61 is shown in greater detail in figure 2 and it includes a frequency generator 65 which provides a phased locked output locked to the mains supply. (The means of phase locking will be well known to the skilled person or may for example may be as described in our co-pending application agent's reference 2007P16032EP. In this case, the output is at a frequency of six times the mains supply frequency for a three phase supply giving, for a 50Hz supply, an output of 300Hz. (It will be appreciated that other frequency mains supplies may be used and the output produced at a multiple of this. Other numbers of phases may also be used.)

The motor controller 61 further includes a standard motor control function 66 which produces a frequency output and a voltage output in a manner well known to the skilled person. The voltage is output to the PWM 60 but the frequency f is summed at a summer 67 with the 300Hz signal provided by the frequency generator 65. The magnitude and phase of the summed 300Hz modulation is chosen to optimise the harmonic current characteristics. The summed frequency is output to the PWM 60. Thus the summed frequency including the 300Hz is used to generate the PWM waveform for driving the motor 8. This can reduce the mains harmonics in a manner to be described with reference to figure 3. The waveform of the summed 300Hz component can be a sinusoid or a square waveform. The square waveform is preferred as it is easier to generate.

Figure 3 shows a mains current waveform applied in a prior art controller. It will be seen that the waveform is not an ideal quasi-square waveform profile. It includes at the peak of each pulse a set of deviations due to charging currents in the capacitor C and artefacts due to DC link voltage compensation of the PWM.

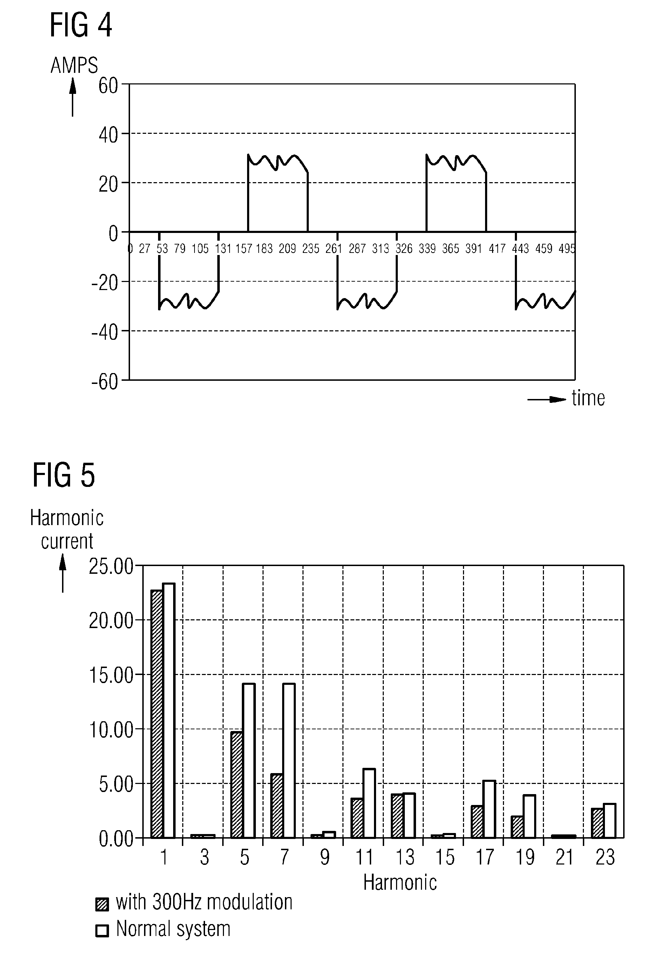

Figure 4 shows the mains supply in the specific embodiment and it will be seen that the waveform is closer to the ideal quasi-square waveform.

Figure 5 shows the harmonics of the mains current with the prior art "normal system" results adjacent those of the specific embodiment and it can be seen that the 5^{th} and 7^{th} harmonics are usefully improved.

In closed loop operation, the frequency generator output is added to a torque demand signal which is generated as part of a speed feedback loop in the motor controller.

## Claims

1. An AC drive for an electric motor comprising a supply input and means to, in use, provide driving voltage waveforms to the electric motor and a Pulse Width Modulation (PWM) modulator for generating the waveforms from a signal including at least a first and a second component which second component having a frequency being a multiple of the mains voltage frequency provided at the supply input.

2. A drive as claimed in claim 1 wherein the second component compensates for current harmonics on the mains supply due to capacitor charging and DC link voltage compensation.

3. An AC drive as claimed in claim 1 or 2 wherein the frequency of the 2^{nd} component is substantially six times that of the frequency of the supply.

4. A drive as claimed in claim 1 comprising a rectifier for rectifying the supply input and to provide a rectified output, an inverter coupled to the rectifier to receive the rectified output therefrom and a controller operably coupled to the inverter to provide control input thereto, the inverter responsive to the control inputs to derive from the rectified inputs a poly-phase set of driving voltages to be applied in use to an AC motor to drive the motor wherein the controller is adapted to supply control inputs in the form of a digitised waveform which waveform including the rotating voltage vector.

5. A drive as claimed in claim 4 wherein the frequency of the rotating voltage vector has an additional component at a frequency of substantially six times that of the supply input.

6. A drive as claimed in any preceding claim including a smoothing element connected across the output of the rectifier.

7. A drive as claimed in claim 6 wherein the smoothing element is a capacitor.

8. A method of reducing mains harmonics in an AC drive circuit comprising:
providing a signal comprising a first and a second component wherein the second component has a frequency being a multiple of the supply frequency;
generating Pulse Width Modulated signals using the signal and
applying the PWM signals to drive an AC motor.

9. A method as claimed in claim 8 wherein the multiple is six.
